# EUROPEAN PATENT APPLICATION

(11) **EP 4 365 804 A1**
(43) Date of publication of application: **08.05.2024**
(21) Application number: 23207320.5
(22) Date of filing: 01.11.2023
(51) Int. Cl.: G06Q 20/06, G06Q 20/36, G06Q 20/38

(54) **A SYSTEM AND METHOD OF PROCESSING TRANSACTIONS FROM CRYPTO WALLETS**

(30) Priority: 01.11.2022 GB 202216234
(71) Applicant: Mastercard International Incorporated, Purchase, NY 10577 (US)
(72) Inventor: MALHOTRA, Sandeep, 289316 Singapore (SG); TRIPATHI, Mukul, Monroe, 08831 (US); SUBRAMANIAM, Shanthan, Baldwin Place, 10505-2008 (US); LINDER, Christopher, White Plains, 10607 (US)
(74) Representative: Keltie LLP

(57) **Abstract**

A computer-implemented method of processing a transaction using cryptocurrency, the method comprising: receiving (512) an authorisation request from a merchant (2) in respect of the transaction, the authorisation request containing a consumer token, the consumer token representing a tokenised crypto identifier associated with a consumer account (406) at a crypto wallet entity (400); detokenizing (514) the consumer token to recover the crypto identifier; determining the crypto wallet entity associated with the crypto identifier; forwarding (516) the authorisation request and crypto identifier to the crypto wallet entity; receiving (520) a transaction approval message from the crypto wallet entity; forwarding (524) the transaction approval message to an acquirer and sending (532) a settlement advice message to a settlement bank (416) to settle the transaction between the crypto wallet entity (400) and the acquirer (3).

## Description

### Field of Disclosure

The present disclosure relates to a system and method of processing transactions from crypto wallets. In embodiments, the disclosure relates to method or processing a transaction using cryptocurrency, a method of generating a consumer token and a transaction system.

### Background to Disclosure

A cryptocurrency wallet is a device or program which holds the public and/or private keys required to undertake cryptocurrency transactions and may additionally provide the functionality to undertake encryption or signing processes.

Cryptocurrency wallets ("crypto wallets") come in different forms and may encompass paper wallets in which keys are written out on paper, hardware wallets where encryption keys are stored in a device like a thumb-drive that can be connected to a computer whenever a transfer needs to be made and online wallets in which keys are stored in an app or other software. Paper and hardware wallets are relatively more difficult for malicious users to access than online wallets but are more limited in function and are a risk of being lost.

Crypto wallets keep a user's private keys (i.e. the passwords that give the user access to their cryptocurrencies) relatively safe (depending on the security of the wallet in question) and accessible. Such wallets allow a user to send and receive cryptocurrencies like Bitcoin and Ethereum.

Unlike a normal wallet, which can hold actual cash, crypto wallets technically don't store cryptocurrency assets. Such holdings instead are located on a blockchain (address) which can only be accessed using a private key. A user's public/private keys prove their ownership of their cryptocurrency and allow them to make transactions.

Over the last few years, cryptocurrency and crypto wallets have become more popular and there is a growing need for a solution that allows consumers to complete payment transactions for goods/services offered in FIAT currency using the crypto currency balance in their crypto wallets.

Although there are a handful of card based solutions in the market that allow consumers to pay for goods and services through cryptocurrency transaction cards, consumers are generally unable to make e-commerce and contactless payment transactions using their mobile crypto wallets without having to sign up for a crypto transaction card.

The present disclosure has been devised to address and mitigate the above mentioned problems.

### Summary of Disclosure

According to a first aspect of the present disclosure there is provided a computer-implemented method of processing a transaction using cryptocurrency, the method comprising: receiving an authorisation request from a merchant in respect of the transaction, the authorisation request containing a consumer token, the consumer token representing a tokenised crypto identifier associated with a consumer account at a crypto wallet entity; detokenizing the consumer token to recover the crypto identifier; determining the crypto wallet entity associated with the crypto identifier; forwarding the authorisation request and crypto identifier to the crypto wallet entity; receiving a transaction approval message from the crypto wallet entity; forwarding the transaction approval message to an acquirer and sending a settlement advice message to a settlement bank to settle the transaction between the crypto wallet entity and the acquirer.

The present disclosure provides a method of processing a transaction using cryptocurrency in which a consumer token is associated with an identifier associated with a consumer's crypto wallet. Effectively, the crypto wallet is treated by conventional transaction infrastructure as an issuer and the transaction infrastructure is configured to connect with a crypto wallet entity, such as a single blockchain network that holds the consumer's/cardholder's cryptocurrency account details or it may be a crypto exchange platform such as Coinbase^{®}. The transaction may be processed, by forwarding the approval message to an acquirer and settlement bank, as soon as the transaction approval message has been received from the crypto wallet entity which enables the transaction to be processed without having to wait for the blockchain to be updated. Typically the acknowledgment may be received on a timescale of within a few hundred milliseconds.

This method of the first aspect of the present disclosure therefore allows consumers to select crypto coins (Bitcoin, Ethereum etc.) from their mobile wallet app, display the balance for that crypto currency by making an API call for balance check and make payments to a Merchant (e-commerce or contactless) in FIAT currency.

The consumer account at the crypto wallet entity may comprise encryption keys for accessing consumer cryptocurrency assets on a blockchain.

The method may further comprise settling the transaction between the crypto wallet entity and the acquirer in fiat currency.

The tokenised crypto identifier may comprise a wallet ID, the wallet ID being a unique identifier associated with the consumer account. The tokenised crypto identifier may alternatively comprise one identifier selected from: a consumer email address; a consumer identifier; a wallet address; a domain name.

The transaction may be processed at a digital enablement system within a transaction infrastructure, the digital enablement system being configured to support tokenised transactions and wherein the method may comprise routing transactions between the crypto wallet entity and the acquirer.

The crypto wallet entity may comprise a crypto wallet host application that is configured to interact with the transaction infrastructure and the method may comprise the digital enablement system onboarding the crypto wallet host application as an issuer entity.

The transaction infrastructure may comprise an issuer processor device that is configured to communicate with the crypto wallet host application and the method may comprise forwarding the authorisation request and crypto identifier to the issuer processor device for onward transmission to the crypto wallet host application.

According to a second aspect of the present disclosure there is provided a computer-implemented method comprising: generating a consumer token; mapping the consumer token to a crypto identifier associated with a consumer account at a crypto wallet entity; sending the consumer token to a consumer computing device to authorise the consumer to access the consumer account at the crypto wallet entity in order to undertake transactions.

The second aspect of the present disclosure provides a method of digitising a crypto wallet entity for use within a transaction infrastructure by mapping a consumer token to a crypto identifier associated with the consumer account at the crypto wallet entity and then sending the consumer token to the consumer's computing device (e.g. wallet app running on a smart device) for use in transactions.

The consumer token may be in a format defined for transaction card account numbers issued in a transaction card account system. In particular, the consumer token may comprise 16 decimal digits.

The crypto identifier may comprise an identifier selected from: a wallet ID, the wallet ID being a unique identifier associated with the consumer account; a consumer email address; a consumer identifier; a wallet address; a domain name.

According to a third aspect of the present disclosure there is provided a transaction system adapted to process transactions over a transaction infrastructure, wherein the transaction takes place between a consumer computing device associated with a crypto wallet entity and a terminal device associated with an acquirer, crypto wallet entity and acquirer entity being connected by the transaction infrastructure, wherein the transaction system is adapted to: generate a consumer token; map the consumer token to a crypto identifier associated with a consumer account at the crypto wallet entity; send the consumer token to the consumer computing device to authorise the consumer to access the consumer account at the crypto wallet entity in order to undertake transactions.

The system may be arranged to: receive an authorisation request from a merchant in respect of the transaction, the authorisation request containing the consumer token; detokenize the consumer token to recover the crypto identifier; determine the crypto wallet entity associated with the crypto identifier; forward the authorisation request and crypto identifier to the crypto wallet entity; receive a transaction approval message from the crypto wallet entity; forward the transaction approval message to the acquirer and send a settlement advice message to a settlement bank to settle the transaction between the crypto wallet entity and the acquirer.

The present disclosure extends to a computing device comprising a memory and a suitably programmed processor, wherein the computing device is adapted to carry out the method of the first or second aspects of the present disclosure.

It will be appreciated that similar benefits and advantages will be associated with the systems and devices implementing these methods as were described previously in association with the methods. In addition, corresponding additional (optional) features set out in respect of the above-described methods would also be equally applicable in respect of the respective systems and devices.

Within the scope of this application it is expressly intended that the various aspects, embodiments, examples or alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### Brief Description of the Drawings

One or more embodiments of the disclosure are now described, by way of example, with reference to the accompanying drawings, in which:
**Figure 1** shows schematically a distributed transaction architecture using a four-party model;
**Figure 2** illustrates elements of a complex distributed system adapted to implement the transaction architecture of Figure 1;
**Figure 3** shows schematically an exemplary system for enabling digital transactions in the transaction architecture of Figures 1 and 2;
**Figure 4** shows schematically a system for enabling payment using cryptocurrency assets in a transaction system;
**Figure 5** illustrates a tokenisation and authorisation flow for transactions undertaken in the transaction system of Figure 4;
**Figures 6a to 6d** show a user journey when undertaking a contactless transaction at a merchant using cryptocurrency;
**Figures 7a to 7f** show a user journey when undertaking an e-commerce transaction using cryptocurrency.

### Detailed Description

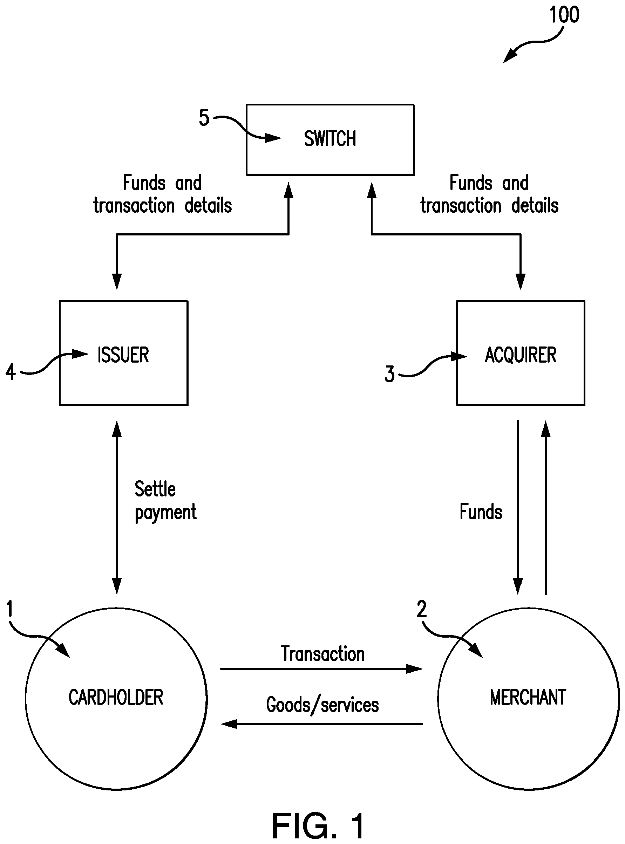

**Figure 1** is a block diagram of a typical four-party model for a payment transaction scheme. The diagram illustrates the entities present in the model and the interactions occurring between entities operating in a card scheme. Normally, card schemes - payment networks linked to payment cards - are based on one of two models: a three-party model or a four-party model (adopted by the present applicant). For the purposes of this document, the four-party model is described in further detail below.

The four-party model may be used as a basis for the transaction network. For each transaction, the model comprises four entity types: cardholder 1 (also referred to herein as "consumer"), merchant 2, acquirer 3 and issuer 4. In this model, the cardholder 1 purchases goods or services from the merchant 2. The issuer 4 is the bank or any other financial institution that issued the card to the cardholder 1. The acquirer 3 provides services for card processing to the merchant 2. The model also comprises a central switch 5 - interactions between the issuer 4 and the acquirer 3 are routed via the switch 5 (the switch is referred to in below as "transaction infrastructure"). The switch 5 enables a merchant 2 associated with one particular bank acquirer 3 to accept payment transactions from a cardholder 1 associated with a different bank issuer 4.

A typical transaction between the entities in the four-party model can be divided into two main stages: authorisation and settlement. The cardholder 1 initiates a purchase of a good or service from the merchant 2 using their card. Details of the card and the transaction are sent to the issuer 4 via the acquirer 3 and the switch 5 to authorise the transaction. The cardholder 1 may have provided verification information in the transaction, and in some circumstances may be required to undergo an additional verification process to verify their identity (such as 3-D Secure in the case of a remote transaction). Once the additional verification process is complete the transaction is authorized.

On completion of the transaction between the cardholder 1 and the merchant 2, the transaction details are submitted by the merchant 2 to the acquirer 3 for settlement. The transaction details are then routed to the relevant issuer 4 by the acquirer 3 via the switch 5. Upon receipt of these transaction details, the issuer 4 provides the settlement funds to the switch 5, which in turn forwards these funds to the merchant 120 via the acquirer 3.

Separately, the issuer 4 and the cardholder 1 settle the payment amount between them. In return, a service fee is paid to the acquirer 3 by the merchant 2 for each transaction, and an interchange fee is paid to the issuer 4 by the acquirer 3 in return for the settlement of funds.

In practical implementations of a four-party system model, the roles of a specific party may involve multiple elements acting together. This is typically the case in implementations that have developed beyond a contact-based interaction between a consumer card and a merchant terminal to digital implementations using proxy or virtual cards on user computing devices such as a smart phone.

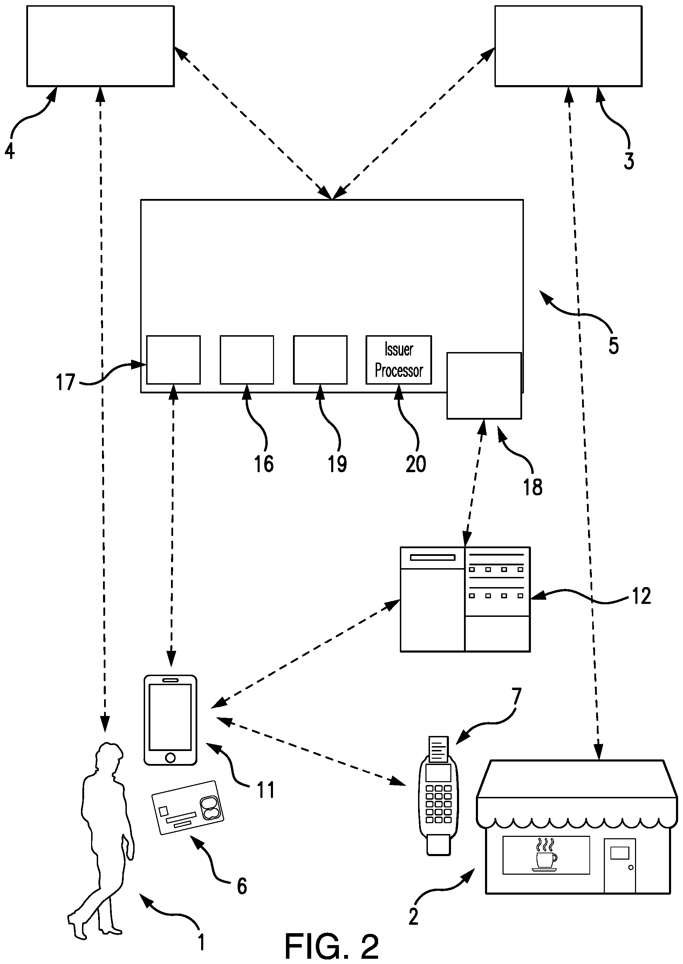

**Figure 2** shows an architecture appropriate for interaction between a cardholder and a merchant. This figure shows a general-purpose architecture for reference, but it shows elements of an architecture used when a cardholder carries out a transaction with a merchant server.

For a conventional transaction, a cardholder 1 will use their payment card 6 - or a mobile computing device such as smartphone 11 adapted for use as a contactless payment device - to transact with a POS terminal 7 of a merchant 2. However, in embodiments relevant to the present disclosure, the cardholder will use his or her computing device - which may be any or all of a cellular telephone handset, a tablet, a laptop, a static personal computer or any other suitable computing device (here cellular telephone handset or smartphone 11 is shown) - and other computing devices such as a smart watch or other wearable device may also be used) - to act either as a proxy for a physical payment card 6 or as a virtual payment card operating only in a digital domain. The smartphone 11 may achieve this with a mobile payment application and a digital wallet, as described below. The smart phone 11 can use these to transact with a merchant POS terminal 7 using NFC or another contactless technology, or to make a payment in association with its wallet service as discussed below. Additionally or alternatively, for a remote transaction, the smartphone 11 may also be able be able to interact with a merchant server 12 representing the merchant 2 over any appropriate network connection, such as the public internet - the connection to the merchant may be provided by an app or application on the computing device.

The transaction scheme infrastructure (hereafter simply referred to as 'transaction infrastructure') 5 here provides not only the computing infrastructure necessary to operate the card scheme and provide routing of transactions and other messaging to parties such as the acquirer 3 and the issuer 4, but also a wallet service / server 17 to support a digital wallet on the cardholder computing device; optionally, an internet gateway 18 is also provided to accept internet-based transactions for processing by the transaction infrastructure. This internet gateway 18 may be provided by a payment service provider, and in some arrangements the merchant 2 may interact with an internet gateway rather than directly with the acquirer. In other embodiments, the wallet service / server 17 may be provided similarly by a third party with an appropriate trust relationship with the transaction scheme provider. To support tokenization, a token service provider 19 is present (again, this is shown as part of transaction infrastructure 5 but may be provided by a third party with appropriate trust relationships), and the transaction infrastructure 5 provides a digital enablement service 16 to support the performance of tokenized digital transactions, and to interact with other elements of the system to allow transactions to be performed correctly - this digital enablement service may include other elements, such as token service provision. A processor device 20 associated with the issuer 4 may be provided within the transaction infrastructure 5. This issuer processor device 20 may handle "on behalf" services (such as authorisation) for the issuer 4.

For a tokenized transaction, the transaction is validated in the transaction scheme by mapping the cardholder token to their card PAN, checking the status of the token (to ensure that it is in date and otherwise valid) and any consumer verification approach used. This allows the issuer to authorise the transaction in the normal manner.

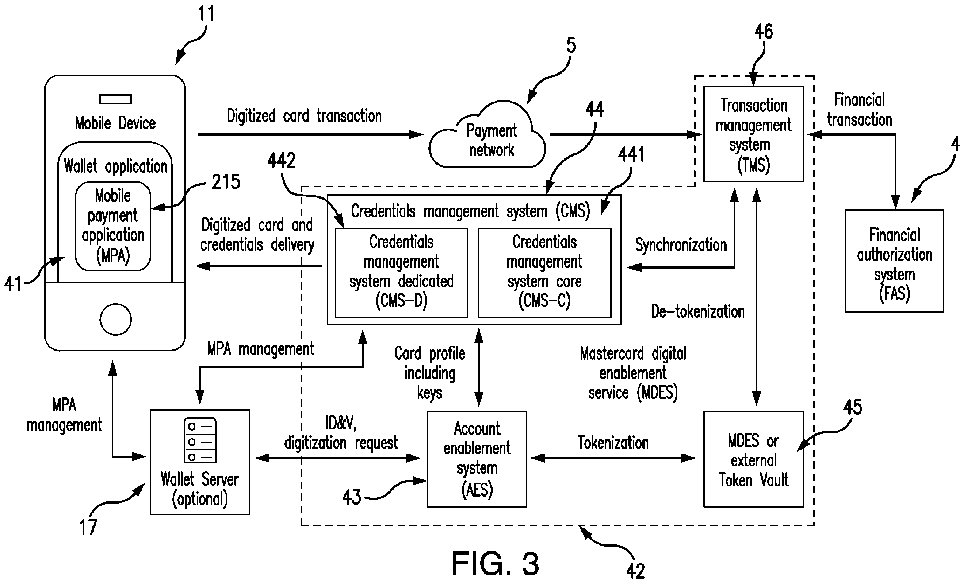

**Figure 3** shows elements of a transaction infrastructure to support digitized payments from a mobile device in more detail. This figure shows as a specific example the Applicant's Mastercard Cloud-Based Payment (MCBP) architecture - this is exemplary rather than specific to the invention, and it illustrates how the architecture is used to support a mobile payment application (MPA) 215 on a mobile device (such as smartphone 11) - here the MPA 215 is shown as contained within a wallet application or digital wallet 41. Such a digital wallet 41 may communicate with the wallet service / server 17 (which here takes the form of a wallet server) to allow management of the MPA 215, and it also can be used to request digitization of a payment card 6 to be used by the mobile device 11 (whereby the digitized payment card is stored in / associated with the digital wallet 41).

The Mastercard Digital Enablement Service (MDES) 42 performs a variety of functions to support mobile payments and digitized transactions. As indicated above, the MDES 42 is exemplary only - other embodiments may use digitization, tokenization and provisioning services associated with other transaction processing infrastructures, for example. The wallet server 17 is not shown as part of the MDES 42 - and need not be present, for example if the MPA 215 is not embedded within a digital wallet 41 - but in the illustrated example acts as an interface between the mobile device 11 and the MDES 42 to enable management of the MPA 215. The MDES 42 also mediates tokenized transactions so that they can be processed through the transaction scheme as for conventional card transactions. The following functional elements are shown within the MDES 42: the Account Enablement System (AES) 43, the Credentials Management System (CMS) 44, the Token Vault 45, and the Transaction Management System (TMS) 46. These will now be described briefly below.

The Account Enablement System (AES) 43 is used in card digitisation and user establishment. It will interact with the MPA 215 (here through the wallet server 17) for card digitisation requests and will populate the Token Vault 45 on tokenization and will interact with the CMS 44 to establish a card profile with associated keys for digital use of the card.

The Credentials Management System (CMS) 44 supports management of cardholder credentials and is a key system within the MDES 42. The core system 441 manages synchronisation with the transaction system as a whole through interaction with the TMS 46 and manages the channel to the AES 43. The dedicated system 442 provides delivery of necessary elements to the MPA 215 such as the digitized card and credentials and keys in the form needed for use. This system may also interact with the wallet server 17 for management of the mobile payment application.

The Token Vault 45 - which is shown here as within the MDES 42, but which may be a separate element under separate control - is the repository for token information including the correspondence between a token and the associated card. In processing tokenized transactions, the MDES 42 will reference the Token Vault 45, and tokenization of a card will result in creation of a new entry in the Token Vault 45.

Transaction Management System (TMS) 46 is used when processing tokenized transactions. If a transaction is identified by the transaction scheme as being tokenized, it is routed to the TMS 46 which detokenizes the transaction by using the Token Vault 45. The detokenized transaction is then routed to the issuer (here represented by Financial Authorisation System 47) for authorisation in the conventional manner. The TMS 46 also interacts with the CMS 44 to ensure synchronisation in relation to the cardholder account and credentials.

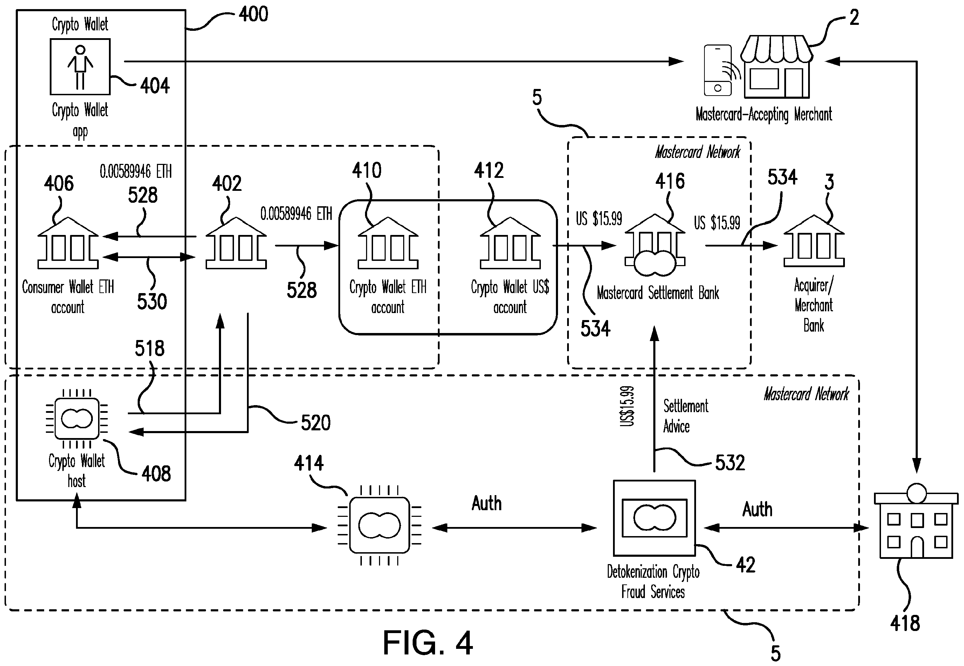

**Figure 4** shows a transaction system according to an embodiment of the present disclosure in which a cardholder's cryptocurrency account has been tokenised using the MDES digital enablement system 42 such that the cardholder can undertake transactions using their cryptocurrency with merchants for goods/services offered in fiat currency.

Figure 4 shows Merchant 2, acquirer 3, transaction infrastructure 5 and digital enablement entities 42 as described above in relation to Figures 1 to 3.

Additionally shown in Figure 4 is a crypto wallet entity 400. The crypto wallet entity may be an online wallet associated with a single blockchain network 402 that holds a cardholder's cryptocurrency account details or it may be a crypto exchange platform such as Coinbase^{®} that allows a consumer to buy, sell, transfer and store cryptocurrency across a range of blockchains.

The crypto wallet entity comprises a crypto wallet app 404 (a type of mobile payment application 215) on the cardholder's mobile device 11, a consumer wallet cryptocurrency account 406 (in the embodiment shown in Figure 4 the cryptocurrency is Ethereum) and a crypto wallet host application 408 that is configured to interact with an issuer processor device 414 that is configured to handle transaction messages between the transaction infrastructure 5 and the crypto entity 400. The consumer may interact with their cryptocurrency account 406 via the wallet app 404 in order to place transactions on to the blockchain).

When the consumer is involved in a transaction with a merchant using their cryptocurrency, the consumer wallet account 406 initiates a sale of the consumer's cryptocurrency to a consolidated crypto wallet entity account 410 on the blockchain. The crypto wallet entity account 410 is associated with a fiat currency account 412 which is configured to pay, in fiat currency, the merchant acquirer 3 on behalf of the consumer.

Authorization of a transaction is routed between the host application 408 and the digital enablement service 42 via the issuer processor device 414. It is noted that the host application 408 is treated by the transaction infrastructure as a traditional issuer entity as shown in Figures 1 and 2 and consequently the crypto wallet entity 400 will be onboarded on to the transaction infrastructure 5 in the same way as fiat currency based issuer entities.

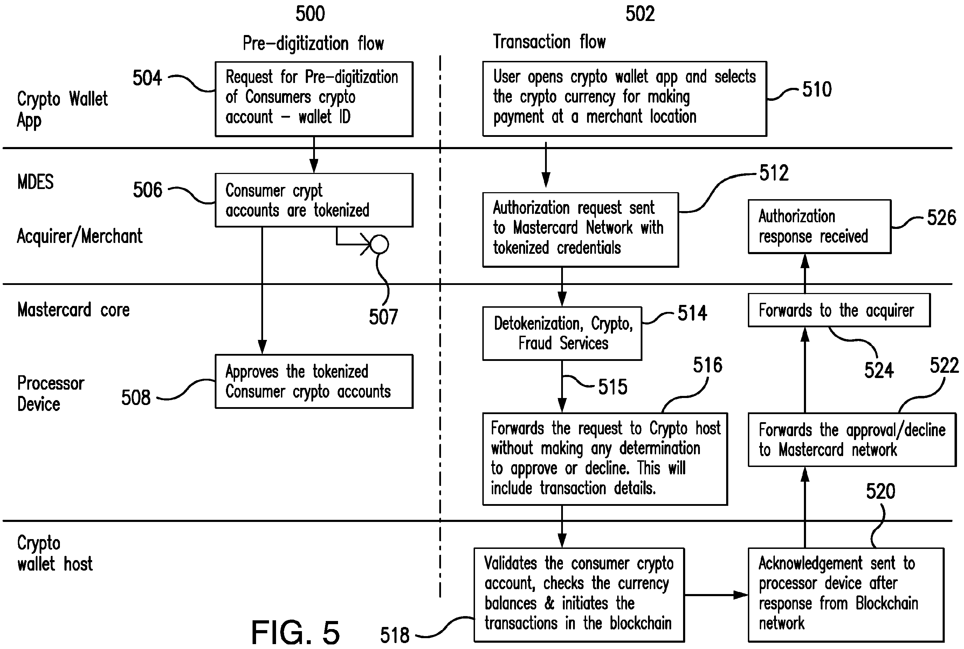

Operation of the transaction system of Figure 4 is described below with further reference to Figure 5.

Figure 5 shows two process flows, a pre-digitization flow 500 in which a crypto account is digitised into the transaction infrastructure 5 and a transaction flow 502 in which the digitised crypto account is then used to undertake a transaction with a merchant.

Turning to the pre-digitization flow process in Figure 5, a consumer opens their crypto wallet app on their smartphone and requests, in step 504 that their cryptocurrency wallet account is digitized. The request is transmitted via the host application and the issuer processor device to the digital enablement service 42. The request comprises a crypto identifier that identifies the consumer's wallet to the digital enablement service 42. The crypto identifier may be a wallet ID, an email address, a consumer identifier, a wallet address, a domain name (e.g. a ".eth" domain name) or any other suitable unique identifier that may be used to identify the consumer's wallet.

In step 506 the crypto wallet account is tokenized by the digital enablement service 42 (by tokenising the crypto identifier to a consumer token 507) such that when the consumer later undertakes a transaction with a merchant, the transaction is validated in the transaction scheme by mapping the consumer token to their crypto identifier, checking the status of the token (to ensure that it is in date and otherwise valid) and any consumer verification approach used. This allows the crypto wallet entity, acting as an issuer, to authorise the transaction.

In step 508 the issuer processor device receives the tokenised crypto identifier from the digital enablement service and the consumer is ready to undertake transactions according to the transaction flow 502.

Turning now to the transaction flow 502 shown in Figure 5.

In step 510 a user at a merchant location wishes to make a transaction and opens their crypto wallet app and selects a crypto currency for making payment to the merchant.

As part of the transaction the consumer token 507 (i.e. tokenised crypto identifier/wallet account information) is sent, in step 512, as part of an authorisation request from the merchant via the acquirer processor 418 to the digital enablement service 42 within the transaction network 5. [It is noted that the acquirer processor 418 is equivalent to the internet gateway 18 in Figure 2.]

In step 514 the digital enablement service 42 detokenises the consumer token to recover the crypto identifier, identify the crypto wallet entity 400 associated with the crypto identifier and performs a range of other checks (e.g. a fraud service check).

The authorisation request (now comprising transaction details and the crypto identifier) is then sent in step 515 to the issuer processor device which, in step 516 forwards the authorisation request to the crypto host without making any determination whether to approve or decline the transaction.

In step 518 the crypto wallet host validates the consumer crypto account from the crypto identifier and then checks the crypto currency balance that the consumer has in their account. Assuming that the consumer has sufficient funds for the transaction the crypto wallet host then initiates transactions on the blockchain network.

In step 520 an acknowledgement (which represents an approval or a decline of the transaction) is received from the blockchain network which is sent to the issuer processor device 414.

It is noted that the acknowledgement received from the blockchain network is just an initial confirmation that the transaction has been initiated on the blockchain and does not necessarily mean that the network's miner have confirmed the transaction. The acknowledgment however is received within a few seconds (e.g. within a few hundred milli seconds for the Ethereum network) of the transaction being initiated by the crypto wallet host and so the transaction proceeds without the need to wait for the blockchain to be updated.

In step 522 the issuer processor device 414 forwards the acknowledgement to the digital enablement service 42 within the transaction infrastructure 5

In step 524 the transaction acknowledgement is forwarded to the acquirer processor 418 and in step 526 an authorisation response is received.

When the crypto wallet host initiates the blockchain transaction in step 518 the public ledger verifies and confirms the transaction through the network's miners in step 528 and a confirmation of the cryptocurrency required for the transaction is sent to the consumer wallet account and to the consolidated crypto wallet entity account. As noted above the blockchain transaction initiates a sale of the consumer's cryptocurrency to a consolidated crypto wallet entity account 410 on the blockchain for crediting to the transaction infrastructure's crypto currency account 410.

Once the public ledger has been updated the blockchain sends confirmation of the transaction, in step 530, to the consumer wallet account 406.

When the digital enablement service 42 receives the acknowledgement in step 522, a settlement advice message is sent in step 532 (Figure 4) to the settlement bank 416 which, in step 534 settles the transaction between the crypto wallet entity's fiat account 412 and the acquirer 3 in fiat currency.

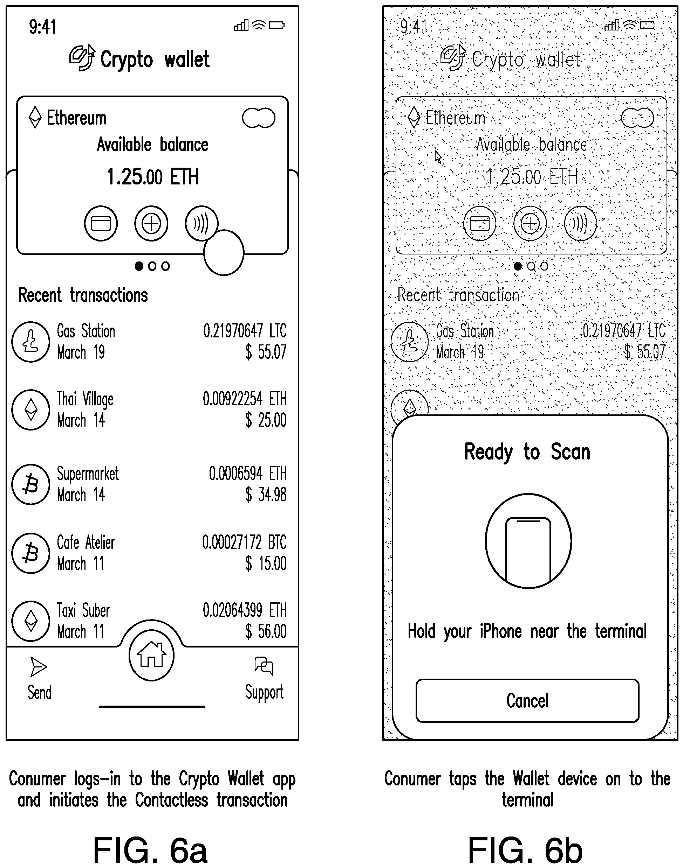

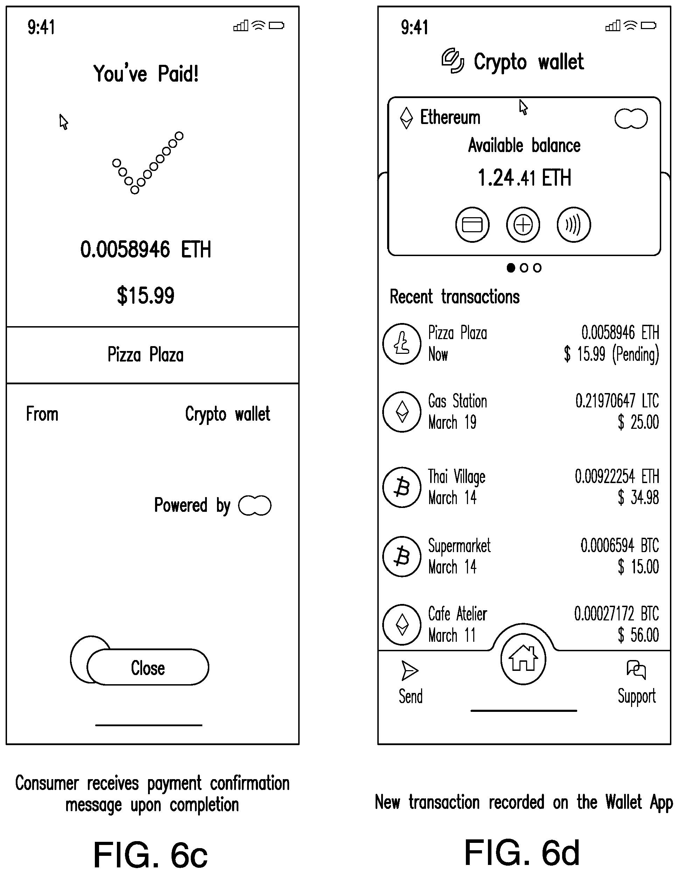

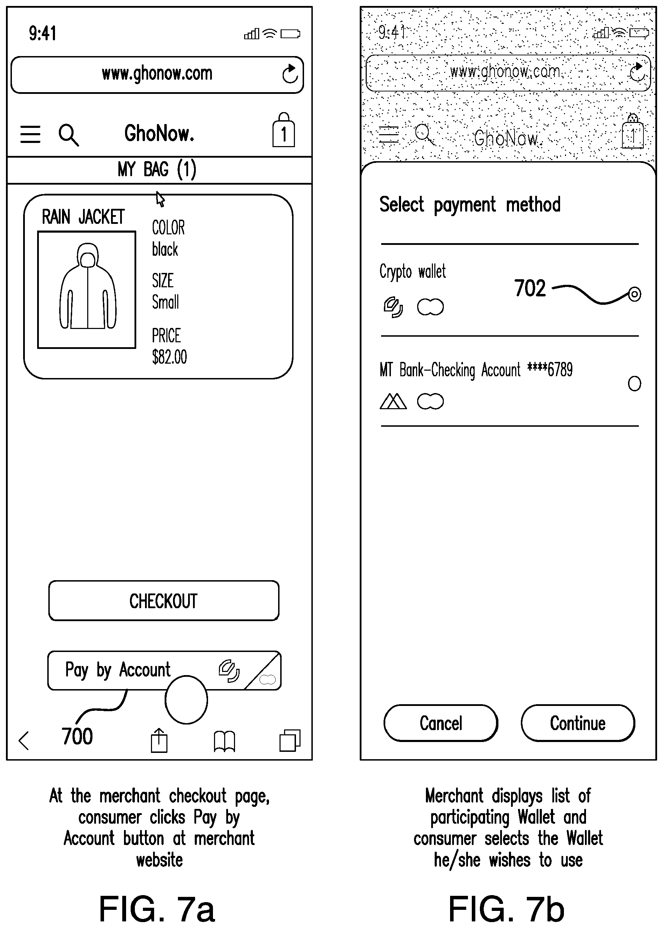

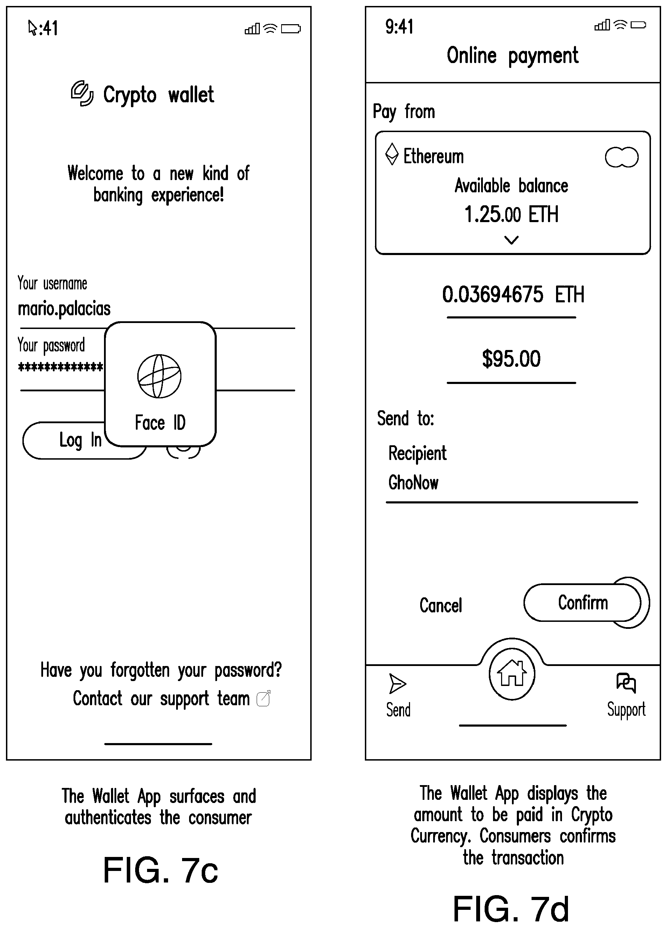

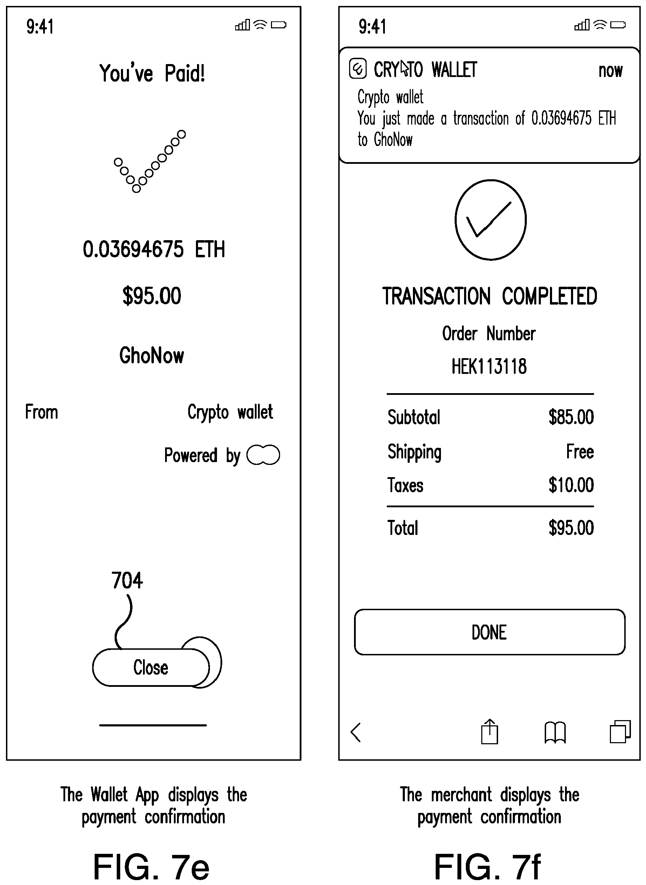

Figures 6a-6c and 7a-7f show the user journey using crypto as a funding source for a contactless transaction (Figure 6) and E-commerce transaction (Figure 7).

In Figure 6a a consumer/user opens the crypto wallet app on their smartphone and the home screen displays the crypto currency balance and most recent transactions. The user then initiates a contactless transaction and the crypto wallet app displays a "Ready to Scan" message (Figure 6b) allowing the user to tap their smartphone to a point of sale (POS) terminal at the merchant. As the transaction is confirmed the crypto wallet app then displays a confirmation message screen (Figure 6c) confirming the transaction that has just taken place (0.0058946 ETH/$15.99 at Pizza Plaza). Finally, the user is returned to the wallet app home screen (Figure 6d) which shows the most recent transactions and the crypto currency balance.

In Figures 7a to 7f a user journey in an e-commerce transaction is shown. In Figure 7a a user is shown to have visited a merchant's website on their smartphone and placed an item into the shopping basket. Figure 7a shows the checkout page with an option to "Pay by Account" (button 700).

Once the user selects the Pay by Account button they are taken (Figure 7b) to a page providing payment method options. As shown in Figure 7b the user has a fiat bank account and a crypto account to choose from and has selected the crypto account (see checkbox 702).

In Figure 7c the crypto wallet app opens and the user is authenticated.

In Figure 7d the crypto wallet app takes the user to a payment screen which confirms the transaction amount in crypto currency along with a fiat exchange amount. The user has selected the Confirm button to initiate payment via the process described above in relation to Figures 4 and 5.

In Figure 7e the crypto wallet app displays a payment confirmation screen and once the user has closed the confirmation (via Close button 704) they are returned to the merchant site (in Figure 7f) which indicates that the transaction is complete.

As the skilled person will appreciate, the embodiments described above are exemplary, and further embodiments falling within the spirit and scope of the disclosure may be developed by the skilled person working from the principles and examples set out above.

## Claims

1. A computer-implemented method of processing a transaction using cryptocurrency, the method comprising:
receiving (512) an authorisation request from a merchant (2) in respect of the transaction, the authorisation request containing a consumer token (507), the consumer token representing a tokenised crypto identifier associated with a consumer account (406) at a crypto wallet entity (400);
detokenizing (514) the consumer token (507) to recover the crypto identifier;
determining the crypto wallet entity associated with the crypto identifier;
forwarding (516) the authorisation request and crypto identifier to the crypto wallet entity;
receiving (520) a transaction approval message from the crypto wallet entity;
forwarding (524) the transaction approval message to an acquirer and sending (532) a settlement advice message to a settlement bank (416) to settle the transaction between the crypto wallet entity (400) and the acquirer (3).

2. A method as claimed in Claim 1, wherein the consumer account (406) at the crypto wallet entity (400) comprises encryption keys for accessing consumer cryptocurrency assets on a blockchain (402).

3. A method as claimed in Claim 1 or Claim 2, comprising settling the transaction between the crypto wallet entity (400) and the acquirer (3) in fiat currency.

4. A method as claimed in any preceding claim, wherein the tokenised crypto identifier comprises a wallet ID, the wallet ID being a unique identifier associated with the consumer account.

5. A method as claimed in any one of Claims 1 to 3, wherein the tokenised crypto identifier comprises one identifier selected from: a consumer email address; a consumer identifier; a wallet address; a domain name.

6. A method as claimed in any preceding claim, wherein the transaction is processed at a digital enablement system within a transaction infrastructure (5), the digital enablement system (16) being configured to support tokenised transactions and wherein the method comprises routing transactions between crypto wallet entity and the acquirer.

7. A method as claimed in Claim 6, wherein the crypto wallet entity (400) comprises a crypto wallet host application (408) that is configured to interact with the transaction infrastructure (5) and the method comprises the digital enablement system (16) onboarding the crypto wallet host application as an issuer entity.

8. A method as claimed in Claim 6 or 7, wherein the transaction infrastructure (5) comprises an issuer processor device (414) that is configured to communicate with the crypto wallet host application (408) and the method comprises forwarding the authorisation request and crypto identifier to the issuer processor device (414) for onward transmission to the crypto wallet host application.

9. A computer-implemented method comprising:
generating a consumer token (507);
mapping the consumer token (507) to a crypto identifier associated with a consumer account (406) at a crypto wallet entity (400);
sending the consumer token to a consumer computing device (11) to authorise the consumer to access the consumer account at the crypto wallet entity in order to undertake transactions.

10. A method as claimed in Claim 9, wherein the consumer token is in a format defined for transaction card account numbers issued in a transaction card account system.

11. A method as claimed in Claim 10, wherein the consumer token comprises 16 decimal digits.

12. A method as claimed in any of Claims 9 to 11, wherein the crypto identifier comprises an identifier selected from: a wallet ID, the wallet ID being a unique identifier associated with the consumer account; a consumer email address; a consumer identifier; a wallet address; a domain name.

13. A transaction system adapted to process transactions over a transaction infrastructure (5), wherein the transaction takes place between a consumer computing device (11) associated with a crypto wallet entity (400) and a terminal device (7) associated with an acquirer (3), the crypto wallet entity (400) and acquirer (3) being connected by the transaction infrastructure, wherein the transaction system is adapted to:
generate a consumer token (507);
map the consumer token to a crypto identifier associated with a consumer account (406) at the crypto wallet entity (400);
send the consumer token (507) to the consumer computing device (11) to authorise the consumer to access the consumer account at the crypto wallet entity in order to undertake transactions.

14. A transaction system as claimed in Claim 13, wherein the system is arranged to:
receive (512) an authorisation request from a merchant (2) in respect of the transaction, the authorisation request containing the consumer token;
detokenize (514) the consumer token to recover the crypto identifier;
determine the crypto wallet entity associated with the crypto identifier;
forward (516) the authorisation request and crypto identifier to the crypto wallet entity (400);
receive (520) a transaction approval message from the crypto wallet entity;
forward (524) the transaction approval message to the acquirer and send a settlement advice message to a settlement bank (416) to settle the transaction between the crypto wallet entity and the acquirer.

15. A computing device comprising a memory and a suitably programmed processor, wherein the computing device is adapted to carry out the method of any of claims 1 to 8 or the method of any of claims 9 to 12.
